# FASCICULE DE BREVET EUROPEEN

(11) **EP 0 968 045 B1**
(45) Date de publication et mention de la délivrance du brevet: **05.12.2001**
(21) Numéro de dépôt: 98904218.9
(22) Date de dépôt: 26.01.1998
(51) Int. Cl.: B01D 53/66, C02F 3/02, C02F 1/78

(54) **PROCEDE ET DISPOSITIF DE RECUPERATION DU GAZ D'EVENT PROVENANT D'UN REACTEUR D'OZONATION**
VERFAHREN UND VORRICHTUNG ZUR RÜCKGEWINNUNG VON ABGASEN AUS EINEM OZONREAKTOR
METHOD FOR RECUPERATING VENT GAS COMING FROM AN OZONIZATION REACTOR

(30) Priorité: 28.01.1997 FR 9700903
(43) Date de publication de la demande: 05.01.2000
(73) Titulaire: DEGREMONT, 92508 Rueil-Malmaison Cédex (FR); OZONIA INTERNATIONAL, 92508 Rueil Malmaison Cédex (FR)
(72) Inventeur: ANDRE, Marc, F-75003 Paris (FR); LIECHTI, Pierre, CH-8105 Regensdorf (CH); THIEBLIN, Eric, 78370 Plaisir (FR); MARCHAND, Denis, 78160 Marly (FR)
(74) Mandataire: Armengaud Ainé, Alain
(86) Numéro de dépôt international: FR9800133
(87) Numéro de publication internationale: WO9832522

(56) Documents cités:
- EP-A- 0 025 589
- EP-A- 0 086 019
- FR-A- 2 100 321
- US-A- 4 045 347
- US-A- 4 132 637
- US-A- 4 202 371

## Description

La présente invention concerne un procédé ainsi qu'un dispositif conçus en vue de récupérer et de réutiliser le gaz d'évent d'un réacteur d'ozonation, plus particulièrement dans une installation de traitement d'effluents notamment d'eaux usées.

Il est bien connu, dans le traitement des effluents et plus particulièrement des eaux usées d'effectuer une oxydation par l'ozone, l'ozone étant mise en dissolution dans l'effluent à oxyder ou dans une partie des boues provenant du réacteur biologique ou issues du clarificateur en utilisant un réacteur d'ozonation souvent dénommé contacteur d'ozonation. On connaît également des installations de traitement d'eaux usées qui comprennent au moins un réacteur biologique, un clarificateur et un réacteur d'ozonation, dans cet ordre ou dans un autre. La présente invention s'applique plus particulièrement à ce type d'installations. On rappelle que dans le cas ou le réacteur d'ozonation traitera l'eau issue du ciarificateur, il est parfois nécessaire d'inclure une étape supplémentaire de traitement par filtration (sur sable) entre ledit ctarificateur et ledit réacteur d'ozonation, ceci afin de retirer de l'effluent les matières en suspension et d'améliorer ainsi l'efficacité du traitement d'ozonation.

Après mise en contact avec l'effluent à traiter ou avec une partie des boues provenant du réacteur biologique ou issue du clarificateur, dans le réacteur d'ozonation, le gaz d'évent qui s'échappe du réacteur contient une certaine quantité d'ozone résiduel. Il est nécessaire d'éviter le rejet dans l'atmosphère d'un gaz d'évent ayant une teneur trop importante en ozone.

Pour éviter un tel rejet, on a envisagé une récupération de l'ozone résiduel en vue de son recyclage en tête du contacteur. Ainsi, WO-95/0 5340 décrit un procédé de purification de l'eau à l'aide d'ozone dans lequel l'ozone résiduel non dissous est recueilli pour être réutilisé dans le traitement de l'eau. De même, EP-A-00 47 925 décrit un procédé et un dispositif pour le traitement de l'eau à l'aide d'ozone dans lequel le gaz d'évent contenant de l'oxygène non dissous et de l'azote résiduel est récupéré et recyclé vers le réacteur d'ozonation. Par ailleurs, le brevet FR-A- 2 490 208 décrit un procédé dans lequel le gaz ozoné issu d'un réacteur d'ozonation est directement injecté dans le traitement biologique, ceci sans étape préalable d'épuisement de l'ozone résiduel et sans que les dispositifs de mise en oeuvre ne soient décrits. Enfin, la demande de brevet FR 97 09882 décrit un procédé et un dispositif d'épuration d'eaux usées comprenant un traitement additionnel des boues par ozonation. L'effluent gazeux provenant des réacteurs d'ozonation est collecté afin de le réutiliser pour traiter les eaux usées ou tout autre liquide résultant du traitement de ces eaux usées. Les revendications 12 à 14 de cette demande antérieure reposent sur une destruction préalable de l'ozone avant sa réutilisation ou revalorisation. Cependant un tel recyclage exige une importante dépense d'énergie étant donné qu'il convient de mettre sous pression, avant son recyclage, le gaz d'évent contenant l'ozone résiduel.

Dans ces conditions, on effectue plus généralement une destruction systématique de l'ozone résiduel. A cet égard, on peut se référer à la publication « Mémento Technique de l'Eau » Edition du cinquantenaire 1989 - deuxième édition éditée par DEGREMONT- pages 907 - 909. Cette destruction présente bien entendu l'inconvénient d'éliminer sans utilisation une quantité non négligeable d'ozone, ce qui se traduit par une augmentation des coûts.

Le document US-A-404 53 47 décrit un procédé de traitement d'eau par l'ozone et enseigne de débarasser les gaz d'évent de l'ozone résiduel par absorption.

La présente invention se propose d'apporter un procédé ainsi qu'un dispositif de récupération et de réutilisation du gaz d'évent ne présentant pas les inconvénients des solutions antérieures rappelées ci-dessus. L'objectif de l'invention est d'une part de récupérer l'ozone résiduel pour l'utiliser efficacement dans le réacteur d'ozonation et d'autre part, d'utiliser, pour le traitement biologique de l'effluent, l'oxygène contenu dans le gaz d'évent ainsi débarrassé de l'ozone résiduel.

En conséquence, la présente invention a pour objet en premier lieu un procédé de récupération et de réutilisation du gaz d'évent provenant d'un réacteur d'ozonation, dans une installation de traitement d'effluents notamment d'eaux usées comprenant, au minimum, dans cet ordre ou dans un autre, un réacteur biologique, un clarificateur ou tout autre dispositif de séparation eau/boue et un réacteur d'ozonation caractérisé en ce que :
- le gaz d'évent provenant du réacteur d'ozonation est mis au contact, d'un flux d'eau contenant des constituants oxydables par l'ozone afin d'utiliser et d'éliminer la majeure partie de l'ozone résiduel ;
- le gaz d'évent débarrassé d'une grande partie de l'ozone résiduel est ensuite mélangé à un fluide prélevé dans l'installation et éventuellement surpressé; ce fluide pouvant être des boues issues du clarificateur ou du réacteur biologique : de l'eau provenant du clarificateur ou de l'eau sortie de l'installation de traitement d'eaux usées, de manière à obtenir un mélange gaz/liquide;
- ledit mélange gaz/liquide est transformé en une émulsion de fines bulles,
- ladite émulsion est introduite dans le réacteur biologique de préférence au voisinage de fond de ce dernier.

Selon la présente invention le flux d'eau mis au contact du gaz d'évent provenant du réacteur d'ozonation peut être un fluide provenant de l'installation, ou tout autre liquide de l'installation consommant de l'ozone efficacement comme les boues provenant du réacteur biologique ou issues du clarificateur. Ce fluide peut être de l'eau brute ou de l'eau prélevée dans le clarificateur, voire tout autre liquide produit par l'installation. Dans le cas de où l'eau alimentant le contacteur mettant en contact le gaz d'évent avec ledit flux d'eau est la même que celle traitée dans le réacteur d'ozonation, une partie ou la totalité dudit flux d'eau contenant les matières oxydables par l'ozone peut être mis au contact avec le gaz d'évent dans le contacteur, l'autre partie alimentant directement le réacteur 14.

En second lieu, la présente invention concerne des moyens de récupération et de réutilisation du gaz d'évent provenant d'un réacteur d'ozonation, dans une installation de traitement d'effluents, notamment d'eaux usées pour la mise en oeuvre du procédé tel que spécifié ci-dessus comprenant, au minimum, dans cet ordre ou dans un autre, un réacteur biologique, un clarificateur (ou tout autre dispositif de séparation eau/boue), un réacteur d'ozonation, cette installation étant caractérisée en ce qu'elle comprend:
- un contacteur de gaz et de liquide, dans lequel le gaz d'évent provenant du réacteur est mis au contact d'un flux d'eau, pouvant être soit de l'eau brute avant le traitement biologique, soit de l'eau clarifiée après le traitement biologique ; une alternative concerne l'utilisation de boues issues du clarificateur ou provenant du réacteur biologique voire tout autre liquide produit par l'installation;
- un éjecteur à eau pour surpresser le gaz d'évent provenant dudit contacteur et produire un mélange gaz/liquide, l'eau utilisée dans ledit éjecteur pour surpresser le gaz d'évent étant de préférence un fluide prélevé dans l'installation ; ce fluide pouvant être des boues issues du clarificateur ou du réacteur biologique ; de l'eau provenant du clarificateur ou de l'eau sortie de l'installation de traitement d'eaux usées ;
- des moyens pour transformer ledit mélange gaz/liquide en une émulsion de fines bulles,
- des moyens pour introduire ledit mélange gaz/liquide de fines bulles de préférence au voisinage du fond du réacteur biologique.

Selon une caractéristique de cette installation, les moyens pour introduire l'émulsion de fines bulles dans le réacteur biologique sont constitués d'une pompe de recirculation prélevant un courant de liquide dans ledit réacteur et d'un canal ou tube, vertical, dans lequel débouche la sortie dudit mélangeur statique et dont l'extrémité inférieure débouche au fond dudit réacteur biologique, ledit courant brut prélevé dans ce réacteur circulant dans ledit canal ou tube vertical afin d'entraîner l'émulsion de fines bulles vers le fond du réacteur biologique.

Selon une autre caractéristique de cette invention, l'éjecteur à eau est directement placé dans le réacteur biologique et l'émulsion de fines bulles est créée à partir de boues directement prélevées dans le réacteur biologique au moyen d'une pompe, la même pompe et le même fluide moteur servant à la fois à la formation de l'émulsion et à la mise en contact avec les boues présentes dans le bassin biologique.

D'autres caractéristiques et avantages de la présente invention ressortiront de la description faite ci-après en référence au dessin annexé sur lesquels :
- la figure 1 est une représentation schématique d'une installation conforme à la présente invention ,
- la figure 2 est une représentation schématique, similaire à la figure 1, d'une variante de cette installation,
- la figure 3 est une représentation schématique, similaire à la figure 1, d'une autre variante de cette installation et,
- la figure 4 est une représentation schématique, similaire à la figure 1, d'une autre variante de cette installation.

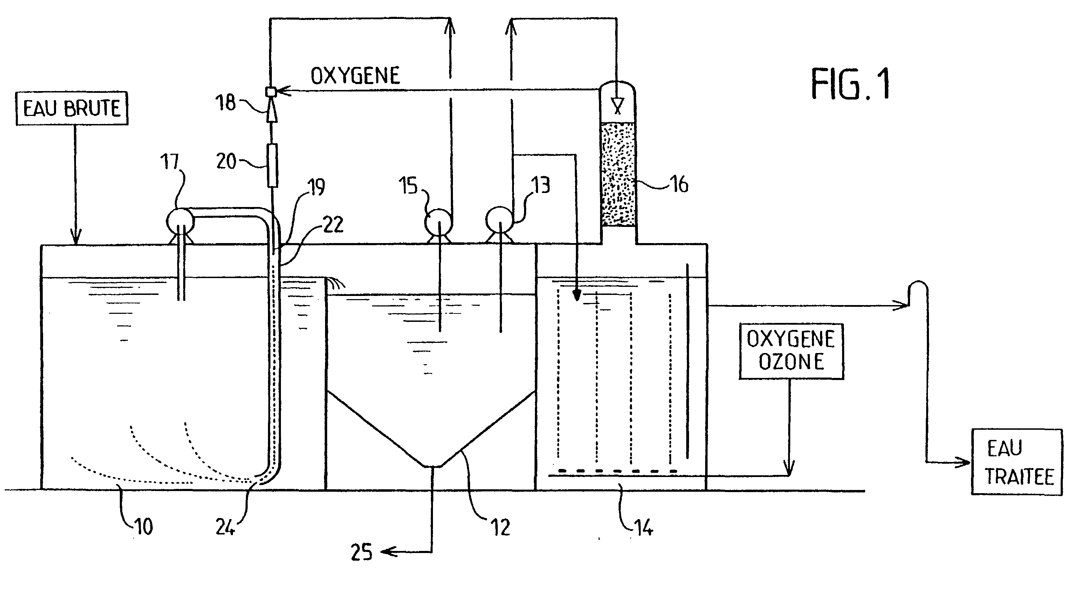

Les figures 1 à 3 représentent une installation mettant en oeuvre une ozonation des eaux issues du clarificateur.

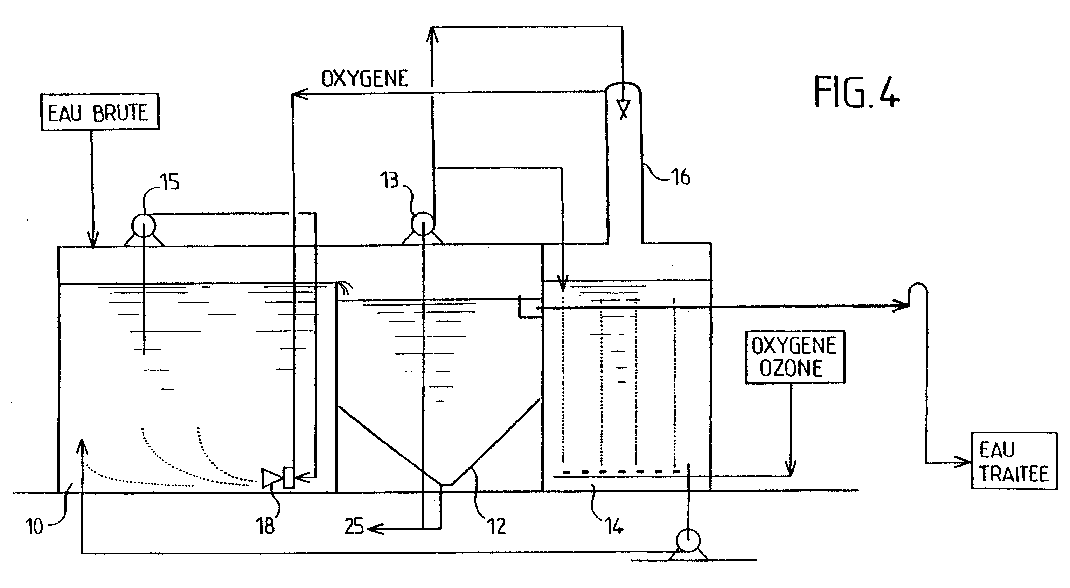

La figure 4 représente une installation mettant en oeuvre une ozonation de la boue issue du clarificateur.

En se référant aux dessins, et plus particulièrement à la figure 1, on voit que l'installation à laquelle s'applique la présente invention est une installation de traitement d'effluents, notamment d'eaux usées qui comprend en série un réacteur biologique 10, un clarificateur 12 et un réacteur d'ozonation 14. Tous ces dispositifs sont bien connus et dans ces conditions, il apparaît inutile de les décrire.

Selon la présente invention, le gaz d'évent du réacteur d'ozonation 14 contenant de l'ozone résiduel et de l'oxygène non dissous est mis en contact, à contre-courant (dans cet exemple de réalisation non limitatif), avec de l'eau provenant du réacteur biologique 10 et du clarificateur 12. Comme on le voit sur la figure, on utilise dans ce but un contacteur 16, constitué de préférence par une colonne à garnissage de type connu dans laquelle une partie de l'eau clarifiée qui y est introduite par l'intermédiaire d'une pompe 13, ruisselle à contre-courant du gaz d'évent sortant du réacteur d'ozonation 14. Il est à noter qu'une partie ou la totalité de l'eau à traiter dans le réacteur d'ozonation 14 peut transiter par le contacteur 16. La majeure partie de l'ozone résiduel est ainsi consommée par les réactions d'ozonation les plus rapides. Cette technique présente le double avantage d'éliminer la majeure partie de l'ozone résiduel présent dans le gaz d'évent issu du réacteur d'ozonation 14 et qui serait nocif pour le traitement biologique s'il était réintroduit en grande quantité et d'améliorer le rendement global d'utilisation de l'ozone pour l'oxydation.

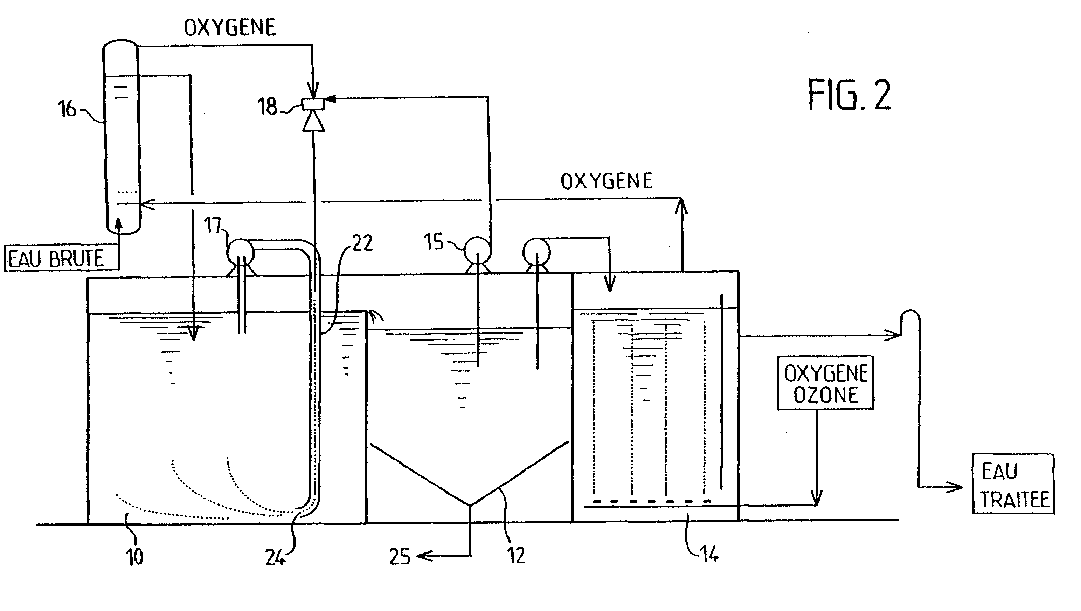

Dans la variante de l'invention illustrée sur la figure 2 le gaz d'évent provenant du réacteur d'ozonation 14 est mis au contact, à co-courant, d'un flux d'eau brute dans le contacteur 16.

On obtient donc un gaz d'évent débarrassé d'une grande partie de l'ozone et ne contenant essentiellement que de l'oxygène qui n'a pas été dissous dans le réacteur 14. Cet oxygène est récupéré selon la présente invention pour être recyclé dans le réacteur biologique 10. Dans ce but, il convient de le surpresser, à moins que le réacteur d'ozonation 14 soit sous pression. Selon l'invention, on utilise à cet effet un éjecteur à eau qui produit un mélange gaz/liquide sous pression. Sur la figure, on a schématisé en 18, un tel éjecteur à eau, qui est d'un type connu et qui en conséquence, ne sera pas décrit en détail. De préférence, l'eau motrice utilisée dans l'éjecteur 18 est de l'eau clarifiée prélevée à l'aide d'une pompe 15 dans le clarificateur 12.

Le mélange gaz/liquide ainsi pressurisé provenant de l'éjecteur à eau 18 (ou directement du réacteur d'ozonation 14 lorsque ce dernier est sous pression) est ensuite transformé en une émulsion de fines bulles. Un mélangeur statique 20 peut être utilisé dans ce but. L'émulsion ainsi obtenue est ensuite introduite dans le réacteur biologique 10. Le dispositif selon l'invention utilise ici, dans ce but des moyens qui sont constitués d'une pompe de recirculation 17 prélevant un courant d'eau dans le réacteur biologique 10 et d'un canal ou tube vertical 22 dans lequel débouche le tube de sortie 19 du mélangeur statique 20 et dont l'extrémité inférieure 24 débouche au fond du réacteur biologique. Grâce à ces moyens, l'émulsion de fines bulles produites est entraînée vers le fond du réacteur biologique 10 et distribuée au sein de la masse de l'effluent présent dans ce réacteur.

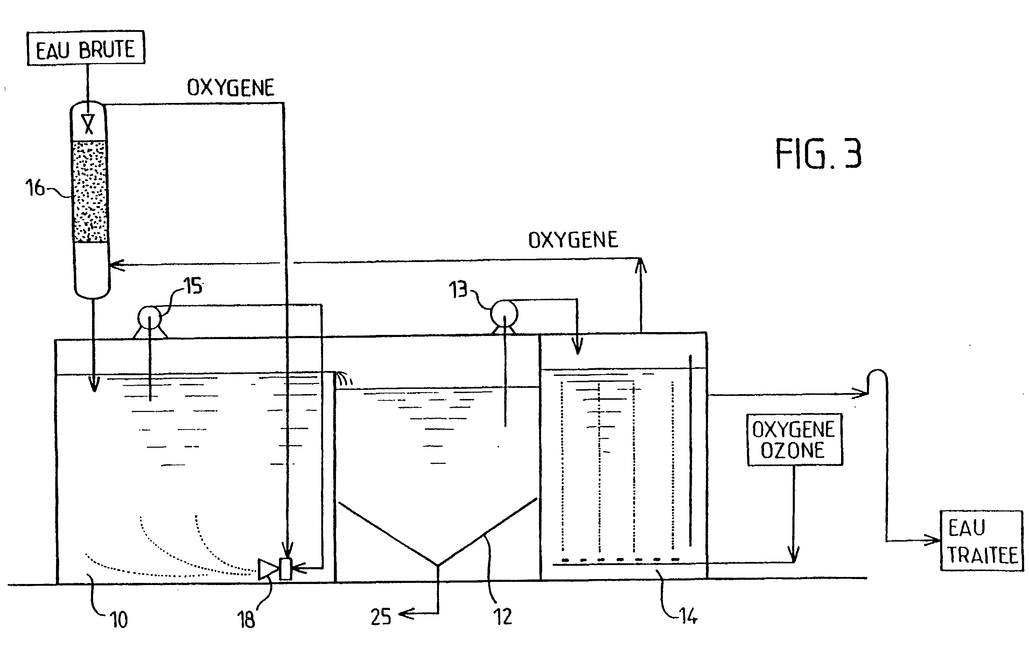

Dans la variante de l'invention illustrée sur la figure 3, le gaz ozoné est mis en contact avec l'eau brute dans un contacteur 16 à contre courant. Cette variante de l'invention est par ailleurs identique au mode de réalisation décrit en référence à la figure 1. L'émulsion peut être obtenue à partir d'eau motrice qui provient du réacteur biologique 10. L'émulsion ainsi obtenue est ensuite introduite dans le réacteur biologique. A cet effet, l'éjecteur à eau 18 peut être directement placé dans le réacteur biologique. Selon une variante, la pompe d'alimentation 15 fournissant l'eau motrice à l'éjecteur peut être éventuellement placée dans le réacteur biologique.

Dans la variante de l'invention illustrée sur la figure 4, le gaz d'évent contenant de l'ozone résiduel et de l'oxygène non dissous est mis en contact avec de la boue 25 issue du clarificateur 12. Comme on le voit sur la figure, un contacteur 16 est utilisé dans lequel la boue est introduite au moyen d'une pompe 13. Il est à noter qu'une partie ou la totalité des boues à traiter dans le réacteur d'ozonation 14 peut transiter par le contacteur 16. Les autres dispositifs de réutilisation du gaz ne sont pas décrits car ils sont identiques à ceux de la figure 3.

On comprend de la lecture de la description qui précède que l'invention permet d'éliminer du gaz d'évent, la majeure partie de l'ozone résiduel tout en évitant un rejet dans l'atmosphère ou une élimination de cet ozone, lequel est utilisé efficacement pour les réactions d'oxydation, pour recycler l'oxygène non dissous contenu dans le gaz d'évent et pour réaliser des traitements aérobies dans le réacteur biologique. On aura remarqué que le dispositif objet de l'invention ne nécessite pas de compresseur pour le recyclage du gaz d'évent, ce dernier étant pressurisé, si nécessaire, par un éjecteur à eau de fabrication simple et économique et n'entraînant qu'une faible consommation d'énergie, en raison d'un fonctionnement à basse pression. Par ailleurs, la production et l'utilisation de fines bulles permettent de réduire les charges hydrostatiques et d'obtenir une très grande surface de transfert gaz liquide dans la masse de l'effluent contenu dans le réacteur biologique, tout en produisant une agitation énergique au sein de cette masse favorisant la répartition des bulles d'oxygène.

Par ailleurs, selon les modes de mise en oeuvre de ladite invention, différents avantages peuvent être attendus. En effet, le traitement de boues dans le réacteur d'ozonation peut autoriser une réduction des masses de boues produites par le procédé de traitement des eaux et le traitement de l'eau en sortie du clarificateur par l'ozone et le recyclage de celle-ci dans le réacteur biologique autorise une réduction des paramètres physico-chimiques de l'eau traitée issue de installation de traitement de l'eau.

## Revendications

1. Procédé de récupération et de réutilisation du gaz d'évent provenant d'un réacteur d'ozonation, dans une installation de traitement d'effluents notamment d'eaux usées comprenant dans cet ordre ou dans un autre, un réacteur biologique (10), un moyen de séparation eau/boue tel que notamment un clarificateur (12) et un réacteur d'ozonation (14) **caractérisé en ce que** :
- le gaz d'évent provenant du réacteur d'ozonation est mis au conract d'un flux d'eau contenant des composés oxydables par l'ozone, afin de consommer efficacement et d'éliminer l'ozone résiduel ;
- le gaz d'évent ainsi débarrassé de l'ozone résiduel est ensuite melangé à un fluide prélevé dans l'installation et éventuellement surpressé afin de produire un mélange gaz/liquide:
- ledit mélange gaz liquide est transformé en une émulsion de fines bulles et :
- ladite émulsion est introduite dans le réacteur biologique de préférence au voisinage du fond de ce dernier.

2. Procédé selon la revendication 1, **caractérisé en ce que** le flux d'eau mis au contact du gaz d'évent provenant du réacteur d'ozonation est de l'eau brute.

3. Procédé selon la revendication 1, **caractérisé en ce que** le flux d'eau mis au contact du gaz d'évent provenant du réacteur d'ozonation est de la boue provenant du réacteur biologique.

4. Procédé selon la revendication 1, **caractérisé en ce que** le flux d'eau mis au contact du gaz d'évent provenant du réacteur d'ozonation est de la boue provenant du clarificateur.

5. Procédé seion la revendication 1, **caractérisé en ce que** le fluide mis au contact du gaz d'évent provenant du réacteur d'ozonation est de l'eau traitée ou de l'eau en cours de traitement dans celui-ci.

6. Procédé selon la revendication 1, **caractérisé en ce que** le fluide mis en contact du gaz d'évent provenant du réacteur d'ozonation est une partie ou la totalité du flux d'alimentation de ce réacteur d'ozonation.

7. Procédé selon la revendication 1, **caractérisé en ce que** le flux d'eau mis au contact du gaz d'évent provenant du réacteur d'ozonation est de l'eau prélevée dans ledit clarificateur, ou d'un liquide quelconque propre à, ou produit par l'installation de traitement de l'effluent.

8. Procédé selon l'une quelconque des revendications 1 à 7, **caractérisé en ce que** le fluide utilisé pour surpresser le gaz d'évent est de l'eau prélevée dans ledit clarificateur et éventuellement filtrée au préalable.

9. Procédé selon l'une quelconque des revendications 1 à 7, **caractérisé en ce que** le fluide utilisé pour surpresser le gaz d'évent est de la boue provenant du réacteur biologique ou du clarificateur.

10. Procédé selon l'une quelconque des revendications 1 à 7, **caractérisé en ce que** le fluide utilisé pour surpresser le gaz d'event est de l'eau traitée sortant du réacteur d'ozonation de l'effluent.

11. Dispositif de récupération et de réutilisation du gaz d'évent provenant d'un réacteur d'ozonation dans une installation de traitement d'effluents, notamment d'eaux usées pour la mise en oeuvre du procédé selon l'une quelconque des revendications précédentes comprenant, dans cet ordre ou dans un autre, un réacteur biologique (10), un dispositif de séparation eau/boue tel qu'un clarificateur (12), un réacteur d'ozonation (14) ce dispositif étant **caractérisé en ce qu'**il comprend :
- un contacteur (16) dans lequel le gaz d'évent provenant du réacteur d'ozonation (14) est mis au contact d'un flux d'eau. ladite eau étant soit de l'eau brute, soit de l'eau prélevée dans le clarificateur (12), soit de l'eau traitée, soit des boues issues du réacteur biologique ou du clarificateur ou tout autre liquide produit par l'installation de traitement :
- un éjecteur à eau (18) pour surpresser le gaz d'évent provenant dudit contacteur afin de produire un mélange gaz/liquide :
- des moyens pour transformer ledit mélange gaz/liquide en une émulsion de fines bulles.
- des moyens (17,24) pour introduire ledit mélange gaz/liquide de préférence au voisinage du fond du réacteur biologique (10).

12. Dispositif selon la revendication 11 **caractérisé en ce que** ledit contacteur (16) est une colonne à garnissage dans laquelle l'eau ruisselle à contre-courant du gaz d'évent.

13. Dispositif selon l'une des revendications 11 ou 12 **caractérisé en ce qu'**un mélangeur statique (20) est placé en sortie de l'éjecteur (18).

14. Dispositif selon l'une quelconque des revendications 11 à 13, **caractérisé en ce que** l'eau utilisée dans l'éjecteur (18) pour surpresser le gaz d'évent provenant du contacteur (16) est de l'eau prélevée dans ledit clarificateur (12) et éventuellement filtrée au préalable.

15. Dispositif selon l'une quelconque des revendications 11 à 13, **caractérisé en ce que** l'eau utilisée dans l'éjecteur (18) pour surpresser le gaz d'évent provenant du contacteur (16) est de la boue provenant du réacteur biologique (10).

16. Dispositif selon l'une quelconque des revendications 11 a 13, **caracterisé en ce que** l'eau utilisée dans l'éjecteur (18) pour surpresser le gaz d'évent provenant du contacteur (16) est de la boue (25) provenant du ciarificateur (12).

17. Dispositif selon l'une quelconque des revendications 11 à 13, **caractérisé en ce que** l'eau utilisée dans l'éjecteur (18) pour surpresser le gaz d'évent provenant du contacteur (16) est de l'eau traitée sortant du réacteur d'ozonation (14) de l'effluent.

18. Dispositif selon l'une quelconque des revendications 11 à 13, **caractérisé en ce que** l'eau utilisée dans l'éjecteur (18) pour surpresser le gaz d'évent provenant du contacteur (16) est de l'eau traitée issue de la filière de traitement.

19. Dispositif selon l'une quelconque des revendications 11 à 18, **caractérisé en ce que** les moyens pour introduire l'émulsion de fines bulles dans le réacteur bioiogique (10) sont constitués d'une pompe de recircuiation (17) prélevant de l'eau dans ledit réacteur biologique (10) et d'un canal ou tube (22), vertical, dans lequel débouche la sortie (19) dudit mélangeur statique (20) et dont l'extrémité inférieure (24) débcuche au voisinage du fond dudit réacteur biologique, ledit courant d'eau prélevé dans ce réacteur circulant dans ledit canal ou tube vertical (22) afin d'entraîner l'émulsion de fines bulles vers le fond du réacteur biologique.

20. Dispositif selon l'une quelconque des revendications 11 à 19, **caractérisé en ce que** les moyens pour introduire l'émulsion de fines bulles dans le réacteur biologique (10) sont constitués d'une pompe de recirculation (15) pouvant être placée à l'intérieur ou à l'extérieur du réacteur biologique, prélevant de l'eau dans le réacteur biologique (10), et de l'éjecteur (18) placé dans le réacteur biologique.

## Patentansprüche

1. Verfahren zur Rückgewinnung und Nutzung von aus einem Ozonisierungsreaktor stammendem Abgas in einer Anlage zur Behandlung von Abprodukten, insbesondere von Abwasser, die in dieser oder einer anderen Reihenfolge einen Bioreaktor (10), eine Einrichtung für die Wasser/Schlamm-Trennung wie speziell ein Klärbecken (12) und einen Ozonisierunasreaktor (14) umfasst, **dadurch gekennzeichnet, dass**
- das aus dem Ozonisierungsreaktor stammende Abgas mit einem durch Ozon oxidierbare Verbindungen enthaltenden Wasserstrom in Berührung gebracht wird, um das Restozon wirksam zu verbrauchen und zu entfernen,
- das so von Restozon befreite Abgas anschließend mit einem der Anlage entnommenen Fluid vermischt und gegebenenfalls verdichtet wird, um ein Gas-Flüssigkeits-Gemisch zu erzeugen,
- das Gas-Flüssigkeits-Gemisch in eine Bläschenemulsion umgewandelt wird und
- diese Emulsion in den Bioreaktor, vorzugsweise in der Nähe von dessen Boden, geleitet wird.

2. Verfahren nach Anspruch 1, **dadurch gekennzeichnet, dass** der Wasserstrom, der mit dem aus dem Ozonisierungsreaktor stammenden Abgas in Berührung gebracht wird, Rohwasser ist.

3. Verfahren nach Anspruch 1, **dadurch gekennzeichnet, dass** der Wasserstrom, der mit dem aus dem Ozonisierungsreaktor stammenden Abgas in Berührung gebracht wird, vom Eioreaktor stammender Schlamm ist.

4. Verfahren nach Anspruch 1, **dadurch gekennzeichnet, dass** der Wasserstrom, der mit dem aus dem Ozonisierungsreaktor stammenden Abgas in Berührung gebracht wird, vom Klärbecken stammender Schlamm ist.

5. Verfahren nach Anspruch 1, **dadurch gekennzeichnet, dass** das Fluid, das mit dem aus dem Ozonisierungsreaktor stammenden Abgas in Berührung gebracht wird, behandeltes Wasser oder wasser, das in ihm behandelt wird, ist.

6. Verfahren nach Anspruch 1, **dadurch gekennzeichnet, dass** das Fluid, das mit dem aus dem Ozonisierungsreaktor Stammenden Abgas in Berührung gebracht wird, ein Teil oder die Gesamtheit des Zustroms zu diesem Ozonisierungsreaktor ist.

7. Verfahren nach Anspruch 1, **dadurch gekennzeichnet, dass** der Wasserstrom, der mit dem aus dem Ozonisierungsreaktor stammenden Abgas in Berührung gebracht wird, Wasser, das dem Klärbecken entnommen wird, oder eine beliebige Flüssigkeit ist, die der Anlage zur Behandlung des Abprodukts eigen ist bzw. von dieser erzeugt wird.

8. Verfahren nach einem der Ansprüche 1 bis 7, **dadurch gekennzeichnet, dass** das zum Verdichten des Abgases eingesetzte Fluid Wasser ist, das dem Klärbecken entnommen und gegebenenfalls zuvor filtriert worden ist.

9. Verfahren nach einem der Ansprüche 1 bis 7, **dadurch gekennzeichnet, dass** das zum Verdichten des Abgases eingesetzte Fluid Schlamm ist, der aus dem Bioreaktor oder Klärbecken stammt.

10. Verfahren nach einem der Ansprüche 1 bis 7, **dadurch gekennzeichnet, dass** das zum Verdichten des Abgases eingesetzte Fluid behandeltes Wasser ist, das den Reaktor zur Ozonisierung des Abprodukts verläßt.

11. Vorrichtung zur Rückgewinnung und Nutzung von aus einem Ozonisierungsreaktcr stammendem Abgas in einer Anlage zur Behandlung von Abprodukten, insbesondere von Abwasser, und zur Durchführung des Verfahrens nach einem der vorhergehenden Ansprüche, welche in dieser oder einer anderen Reihenfolge einen Bioreaktor (10), eine Einrichtung für die Wasser/Schlamm-Trennung wie ein Klärbecken (12) und einen Ozonisierungsreaktor (14) umfasst, **dadurch gekennzeichnet, dass sie**
- einen Kontaktor (16), in welchem das aus dem Ozonisierungsreaktor (14) stammende Abgas mit einem Wasserstrom in Berührung gebracht wird, wobei das Wasser Rohwasser, dem Klärbecken (12) entnommenes Wasser, behandeltes Wasser, aus dem Bioreaktor bzw. dem Klärbecken stammender Schlamm oder eine andere Flüssigkeit, die von der Behandlungsanlage erzeugt wird, ist,
- eine Wassersaugstrahlpumpe (18) zum Verdichten des aus dem Kontaktor stammenden Abgases, um ein Gas-Flüssigkeits-Gemisch zu erzeugen,
- Mittel, um das Gas-Flüssigkeits-Gemisch in eine Bläschenemulsion umzuwandeln, und
- Mittel (17, 24), um dieses Gas-Flüssigkeits-Gemisch vorzugsweise in der Nähe des Bodens des Bioreaktors (10) einzuleiten,
umfasst.

12. Vorrichtung nach Anspruch 11, **dadurch gekennzeichnet, dass** der Kontaktor (16) eine Kolonne mit Einbauten ist, durch welche das Wasser im Gegenstrom mit dem Abgas rieselt.

13. Verrichtung nach Anspruch 11 oder 12, **dadurch gekennzeichnet, dass** nach dem Ausgang der Saugstrahlpumpe (18) ein statischer Mischer (20) angeordnet ist.

14. Vorrichtung nach einem der Ansprüche 11 bis 13, **dadurch gekennzeichnet, dass** das wasser, das in der Saugstrahlpumpe (18) verwendet wird, um das aus dem Kontaktor (16) stammende Abgas zu verdichten, Wasser ist, das dem Klärbecken (12) entnommen und gegebenenfalls zuvor filtriert worden ist.

15. Vorrichtung nach einem der Ansprüche 11 bis 13, **dadurch gekennzeichnet, dass** das Wasser, das in der Saugstrahlpumpe (18) verwendet wird, um das aus dem Kontaktor (16) stammende Abgas zu verdichten, aus dem Bioreaktor (10) stammender Schlamm ist.

16. Vorrichtung nach einem der Ansprüche 11 bis 13, **dadurch gekennzeichnet, dass** das Wasser, das in der Saugstrahlpumpe (18) verwendet wird, um das aus dem Kontaktor (16) stammende Abgas zu verdichten, aus dem Klärbecken (12) stammender Schlamm (25) ist.

17. Vorrichtung nach einem der Ansprüche 11 bis 13, **dadurch gekennzeichnet, dass** das Wasser, das in der Saugstrahlpumpe (18) verwendet wird, um das aus dem Kontaktor (16) stammende Abgas zu verdichten, behandeltes Wasser ist, das den Reaktor (14) zur Ozonisierung des Abprodukts verläßt.

18. Vorrichtung nach einem der Ansprüche 11 bis 13, **dadurch gekennzeichnet, dass** das Wasser, das in der Saugatrahlpumpe (18) verwendet wird, um das aus dem Kontaktor (16) stammende Abgas zu verdichten, behandeltes Wasser ist, das aus der Behandlungslinie stammt.

19. Vorrichtung nach einem der Ansprüche 11 bis 18, **dadurch gekennzeichnet, dass** die Mittel zum Einleiten der Bläschenemulsion in den Bioreaktor (10) aus einer Rückflußpumpe (17), die dem Bioreaktor (10) Wasser entnimmt, und einer vertikalen Leitung oder einem vertikalen Rohr (22) bestehen, in welches der Ausgang (19) des statischen Mischers (20) führt und dessen unteres Ende (24) in der Nähe des Bodens des Bioreaktors mündet, wobei der diesem Reaktor entnommene Wasserstrom in diese vertikale Leitung oder dieses vertikale Rohr (22) fließt, um die Bläschenemulsion zum Boden des Bioreaktors mitzureißen.

20. Vorrichtung nach einem der Ansprüche 11 bis 19, **dadurch gekennzeichnet, dass** die Mittel zum Einleiten der Bläschenemulsion in den Bioreaktor (10) aus einer Rückflußpumpe (15), die innerhalb oder außerhalb des Bioreaktors angeordnet sein kann und dem Bioreaktor (10) Wasser entnimmt, und der im Bioreaktor angeordneten Saugstrahlpumpe (18) bestehen.

## Claims

1. Process for the recovery and reuse of the vent gas coming from an ozonization reactor, in an installation for the treatment of effluents, particularly waste water, comprising in the indicated or some other order, a biological reactor (10), a water/sludge separating means, such as in particular a clarifier (12) and an ozonization reactor (14), **characterized in that**:
- the vent gas coming from the ozonization reactor is contacted with a flow of water containing cocpounds oxidizable by ozone, in order to effectively consume and eliminate the residual ozone,
- the vent gas freed in this way from the residual ozone is then mixed with a fluid taken from the installation and optionally pressurized in order to produce a gas/liquid mixture,
- said gas/liquid mixture is then transformed into an emulsion of fine bubbles and
- said emulsion is introduced into the biological reactor, preferably in the vicinity of the bottom of the latter.

2. Process according to claim 1, **characterized in that** the flow of water contacted with the vent gas coming from the ozonization reactor is untreated water.

3. Process according to claim 1, **characterized in that** the flow of water contacted with the vent gas coming from the ozonization reactor is the sludge from the biological reactor.

4. Process according to claim 1, **characterized in that** the flow of water contacted with the vent gas coming from the ozonization reactor is sludge from the clarifier.

5. Process according to claim 1, **characterized in that** the fluid with the vent gas coming from the ozonization reactor is treated water or water being treated therein.

6. Process according to claim 1, **characterized in that** the fluid contacted with the vent gas coming from the ozonization reactor is part or all of the feed flow of said ozonization reactor.

7. Process according to claim 1, **characterized in that** the flow of water contacted with the vent gas coming from the ozonization reactor is the water taken from said clarifier, or a random liquid suitable for or produced by the effluent treatment installation.

8. Process according to any one of the claims 1 to 7, **characterized in that** the fluid used for pressurizing the vent gas is the water taken from said clarifier and optionally filtered beforehand.

9. Process according to any one of the claims 1 to 7, **characterized in that** the fluid used for pressurizing the vent gas is the sludge from the biological reactor or clarifier.

10. Process according to any one of the claims 1 to 7, **characterized in that** the fluid used for pressurizing the vent gas is the treated water leaving the effluent ozonization reactor.

11. Apparatus for the recovery and reuse of the vent gas coming from an ozonization reactor in an installation for the treatment of effluents, particularly waste water for performing the process according to any one of the preceding claims comprising, in the indicated or some other order, a biological reactor (10), a water/sludge separating device such as a clarifier (12) and an ozonization reactor (14), said apparatus being **characterized in that** it comprises:
- a contactor (16) in which the vent gas from the ozonization reactor (14) is contacted with a flow of water, said water either being untreated water, or water taken from the clarifier (12), or treated water, or sludge from the biological reactor or clarifier or any other liquid produced by the treatment installation,
- a water ejector (18) for pressurizing the vent gas coming from said contactor in order to produce a gas/liquid mixture,
- means for transforming said gas/liquid mixture into an emulsion of fine bubbles,
- means (17, 24) for introducing said gas/liquid mixture, preferably in the vicinity of the bottom of the biological reactor (10).

12. Apparatus according to claim 11, **characterized in that** said contactor (16) is a packed column in which there is a countercurrent flow of the water with respect to the vent gas.

13. Apparatus according to one of the claims 11 or 12, **characterized in that** a static mixer (20) is placed at the outlet from the ejector (18).

14. Apparatus according to any one of the claims 11 to 13, **characterized in that** the water used in the ejector (18) for pressurizing the vent gas coming from the contactor (16) is the water taken from the clarifier (12) and which is optionally filtered beforehand.

15. Apparatus according to any one of the claims 11 to 13, **characterized in that** the water used in the ejector (18) for pressurizing the vent gas coming from the contactor (16) is the sludge from the biological reactor (10).

16. Apparatus according to any one of the claims 11 to 13, **characterized in that** the water used in the ejector (18) for pressurizing the vent gas coming from the contactor (16) is the sludge (25) from the clarifier (12).

17. Apparatus according to any one of the claims 11 to 13, **characterized in that** the water used in the ejector (18) for pressurizing the vent gas coming from the contactor (16) is the treated water from the effluent ozonization reactor (14).

18. Apparatus according to any one of the claims 11 to 13, **characterized in that** the water used in the ejector (18) for pressurizing the vent gas coming from the contactor (16) is the treated water from the treatment line.

19. Apparatus according to any one of the claims 11 to 18, **characterized in that** the means for introducing the emulsion of fine bubbles into the biological reactor (10) are constituted by a recycle pump (17) removing water from said biological reactor (10) and a vertical tube or duct (22) into which issues the outlet (19) of said static mixer (20) and whose lower end (24) issues in the vicinity of the bottom of said biological reactor, said water flow taken from the reactor circulating in said vertical tube or duct (22) in order to drive the emulsion of fine bubbles towards the bottom of the biological reactor.

20. Apparatus according to any one of the claims 11 to 19, **characterized in that** the means for introducing the emulsion of fine bubbles into the biological reactor (10) are constituted by a recycle pump (15), which can be placed inside or outside the biological reactor removing water from said biological reactor (10) and the ejector (18) is placed in the biological reactor.
